# EUROPÄISCHE PATENTSCHRIFT

(11) **EP 0 739 069 B1**
(45) Veröffentlichungstag und Bekanntmachung des Hinweises auf die Patenterteilung: **03.03.1999**
(21) Anmeldenummer: 96106149.6
(22) Anmeldetag: 19.04.1996
(51) Int. Cl.: H02G 3/04

(54) **Kombinierte Anschlusseinrichtung**
Combined connection device
Dispositif de raccordement combiné

(30) Priorität: 22.04.1995 DE 19514883
(43) Veröffentlichungstag der Anmeldung: 23.10.1996
(73) Patentinhaber: Zumtobel Licht GmbH, 61250 Usingen (DE)
(72) Erfinder: Gujenas, Stanislaus, 65439 Flörsheim (DE)
(74) Vertreter: Fuchs Mehler Weiss & Fritzsche

(56) Entgegenhaltungen:
- EP-A- 0 114 918
- EP-A- 0 426 889
- US-A- 4 905 433
- US-A- 4 979 633

## Beschreibung

Die Erfindung betrifft eine kombinierte Anschlußvorrichtung, insbesondere für verschiedenartige Versorgungssysteme in Hospitälern, mit einer an einer Gebäudewand im wesentlichen horizontal zu befestigenden Profilschiene, die in kanalartige Räume unterteilt ist und/oder mittels Abdeckelementen in kanalartige Räume unterteilbar ist, in denen die erforderlichen Leitungen und Betriebsmittel untergebracht sind, welche mit an der Außenseite der Vorrichtung angebrachten Anschlußmittel verbunden sind, und die eine Ober- und eine Unterwand sowie eine Frontblende trägt.

Eine derartige Anschlußvorrichtung für Versorgungs- und Entsorgungssysteme an Arbeits- oder Pflegeplätzen ist beispielsweise aus der EP 0 426 889 A1 bekannt. Frontseitig wird die Anschlußvorrichtung mit einem Deckel abgedeckt, der lediglich die zugängliche Öffnung verdeckt, so daß die Ober- und die Unterwand bzw. die dafür vorgesehenen entsprechenden Profilschienen sichtbar sind. Die frontseitige Abdeckung kann auch durch die Rückwand einer Kanalschiene gebildet werden. Die Bauteile der Anschlußvorrichtung lassen die gesamte Vorrichtung sehr wuchtig erscheinen. Der ästhetische Eindruck läßt daher zu wünschen übrig und entspricht nicht mehr den Anforderungen einer möglichst wohnlichen Atmosphäre in einem Patientenzimmer.

Nach heutigen Maßstäben sollen die in einem Hospital erforderlichen Versorgungsleitungen für entsprechende medizinische Systeme möglichst unaufdringlich im Patientenzimmer angeordnet sein und die Anschlußvorrichtung soll den hohen Anforderungen in Bezug auf Funkionalität und Ergonomie gerecht werden. Darüber hinaus müssen moderne Anschlußvorrichtungen hinsichtlich ihrer Gestaltungsmöglichkeiten variabel sein, so daß sie sich in unterschiedlich eingerichtete und ausgestattete Patientenzimmer harmonisch einfügen lassen.

Aufgabe der Erfindung ist daher eine kombinierte Anschlußvorrichtung, die ästhetisch ansprechend ausgebildet ist und bei einfachem Aufbau hinsichtlich der Gestaltung variabel ist.

Diese Aufgabe wird mit einer kombinierten Anschlußvorrichtung gelöst, bei der die Frontblende über ihre gesamte Länge eine konkave Krümmung aufweist, und sich die Frontblende so weit nach oben und nach unten erstreckt, daß sie mindestens die Oberwand und die Unterwand verdeckt, wobei die Frontblende austauschbar befestigt ist.

Die konkave Krümmung der Frontblende läßt die gesamte Anschlußvorrichtung unaufdringlich erscheinen, wobei der Eindruck vermittelt wird, daß die Bautiefe der Anschlußvorrichtung im Gegensatz zur Verwendung einer beispielsweisen planen oder konvexen Frontblende gering ist. Dadurch, daß die Frontblende gegenüber der Ober- und der Unterwand vorsteht, wird der Gesamteindruck der Anschlußvorrichtung fast ausschließlich durch die konkav gekrümmte Frontblende bestimmt.

Die Auswahl und Austauschbarkeit der Frontblende ermöglicht es dem Anwender, durch entsprechende Materialien eine Anpassung der ansonsten unverändert bleibenden Anschlußvorrichtung an die Einrichtung eines Patientenzimmers auf einfache Weise vornehmen zu können. Um die Gestaltungsmöglichkeiten der Anschlußvorrichtung noch weiter zu verbessern, besteht die Frontblende vorzugsweise aus mehreren in Längsrichtung der Vorrichtung nebeneinander angeordneten Blendenabschnitten. Diese Blendenabschnitte können transparent oder mit unterschiedlichem Dekor versehen sein. Da die Anschlußvorrichtung in der Regel über den Patientenbetten angeordnet ist, können in den Bereichen, wo die Betten aufgestellt sind, die Blendenabschnitte aus transparenten Materialien bestehen, die vorzugsweise hinterleuchtet sind. Im Bereich neben den Betten kann die Frontblende aus Blendenabschnitten bestehen, die die Anschlußmittel z.B. für medizinische Gase oder dergl. aufweisen.

Die Anschlußmittel können auch am Unterboden angeordnet sein, wobei in diesem Fall die Frontblende so weit nach unten heruntergezogen ist, daß sie die Anschlußmittel verdeckt. Auch bei dieser Ausführungsform wird der optische Eindruck durch die Frontblende bestimmt.

Zum ästhetischen Eindruck trägt auch bei, daß die Frontblende vorzugsweise ihre eigenen Befestigungsmittel verdeckt, die vorteilhafterweise an der Rückseite der Frontblende angeordnet sind.

Die Frontblende bzw. die jeweiligen Blendenabschnitte können einstückig ausgebildet sein. Es besteht aber auch die Möglichkeit, die Frontblende mehrteilig auszubilden, wobei vorzugsweise ein innenliegendes, die Befestigungsmittel tragendes Trägerelement und eine außen liegende Dekorplatte vorgesehen sind, wobei Trägerelement und Dekorplatte an ihren Ober- und Unterkanten von jeweils einer gemeinsamen Profilleiste eingefaßt sind. Diese Ausführungsform bietet die Möglichkeit, bei einem Wechsel der Einrichtung auf einfache Weise eine Anpassung an die Ausstattung des Patientenzimmers vorzunehmen. Anstelle des Austausches der gesamten Frontblende, braucht bei dieser Ausführungsform nur die Dekorplatte ausgetauscht zu werden, und die übrigen Bauteile können weiterverwendet werden.

Um der Frontblende eine ausreichende Stabilität zu verleihen, was insbesondere dann von Wichtigkeit ist, wenn die Frontblende auch die Anschlußmittel trägt, weist die Frontblende im Bereich der oberen und der unteren Kante Verstärkungen auf, die vorzugsweise auf der Rückseite der Frontblende angeformt sein können. Die Befestigungsmittel der Frontblende sind vorzugsweise im Bereich dieser Verstärkungen angebracht.

Um die Anschlußvorrichtung auch oder nur als Raumbeleuchtungsvorrichtung einsetzen zu können, ist die Oberwand zumindest abschnittweise vorzugsweise transparent ausgebildet, wobei unterhalb der Oberwand ein Lampenraum abgeteilt ist, in dem mindestens eine Lampe angeordnet ist.

Der Lampenraum steht vorteilhafterweise mit einem sich nach unten verjüngenden hinter der Frontblende befindlichen Blendenraum in Verbindung, so daß dieser Raum zumindest zum Teil von der im Lampenraum befindlichen Lampe ausgeleuchtet werden kann, so daß im Falle einer transparenten Frontblende eine Hinterleuchtung auf einfache Weise erzielt werden kann.

Um eine entsprechende Abstrahlung sowohl nach oben als auch in den Blendenraum zu gewährleisten, ist eine den Lampenraum abtrennende erste Trennwand als Reflektor ausgebildet, wobei diese erste Trennwand einen sich von der Oberwand nach unten erstreckenden vertikalen Abschnitt aufweist, der in einen auf die Frontblende weisenden horizontalen Abschnitt übergeht. Der Blendenraum ist mittels einer zweiten Trennwand gegenüber dem die Leitungen und Betriebsmittel aufweisenden Innenraum abgeteilt, die als Reflektor ausgebildet sein kann und vorzugsweise rückseitig alle Betriebsmittel für die Beleuchtung aufnimmt. Hierbei ist es von Vorteil, wenn die zweite Trennwand sich vom horizontalen Abschnitt der ersten Trennwand schräg nach unten bis an die Frontblende erstreckt.

Die Lampe ist hierbei derart im Lampenraum angeordnet, daß eine an der Lampe anliegende Tangente oberhalb der Ebene der zweiten Trennwand liegt und als Tangente durch den unteren Eckpunkt der Frontblende geht. Dadurch wird sichergestellt, daß ein bestimmter Anteil des von der Lampe ausgehenden Lichtes für die Hinterleuchtung der Frontblende zur Verfügung steht. Außerdem wird hierdurch ein gleichmäßiger Helligkeitsverlauf von oben nach unten erzielt, der sich positiv auf den ästhetischen Eindruck der gesamten Anschlußvorrichtung auswirkt.

Um die Lichtintensität im oberen Bereich der transparenten Frontblende zu reduzieren und die Reflexion nach oben zu verstärken, kann zwischen dem Lampenraum und dem Blendenraum bevorzugt eine dritte Trennwand angeordnet sein. Die dritte Trennwand ist vorzugsweise oberhalb des Endbereiches der zweiten Trennwand unter Freilassung eines Lichtaustrittsspaltes angeordnet und erstreckt sich nach oben bis zur Oberwand der Anschlußvorrichtung. Die dritte Trennwand kann in den Blendenraum gekrümmt sein. Um eine Ausleuchtung des Blendenraumes zu gewährleisten, endet die dritte Trennwand vorzugsweise mit ihrer Kante vor oder an der zuvor beschriebenen Tangente. Weiterhin ist es erforderlich, daß die Lampe oberhalb einer durch die Kante der dritten Trennwand gehenden Horizontale angeordnet ist.

Je nachdem welche Lichtintensität im oberen Bereich der Frontblende auftreffen soll, kann die dritte Trennwand transparent, als Reflektor oder beispielsweise als Lochblech ausgebildet sein.

Um dem Patienten auch eine Leseleuchte bzw. dem Arzt eine Untersuchungsleuchte zur Verfügung zu stellen, ist der Unterboden zumindest abschnittweise ebenfalls transparent ausgebildet und über dem Unterboden ist vorzugsweise eine Leselampe innerhalb der Anschlußvorrichtung angeordnet.

Die erfindungsgemäße Anschlußvorrichtung bietet den Vorteil, daß dem Anwender eine Auswahlmöglichkeit und Kombinierbarkeit von einfach beschichteten Frontverblendungen, über Holzdekorelemente bis hin zu gestalterisch, hochwertigen Glaselementen zur Verfügung gestellt werden kann. Aus Hygienegründen ist die Oberfläche der Flächen ohne Vorsprünge und Vertiefungen ausgeführt.

Beispielhafte Ausführungsformen der Erfindung werden nachfolgend anhand der Zeichnungen näher erläutert. Es zeigen:
- Figur 1: eine Frontansicht der erfindungsgemäßen Anschlußvorrichtung,
- Figur 2: einen Schnitt längs der Linie II-II durch die in Figur 1 gezeigten Anschlußvorrichtung und
- Figur 3: eine Detaildarstellung des Lampen- und des Blendenraums der in Figur 2 gezeigten Ausführungsform.

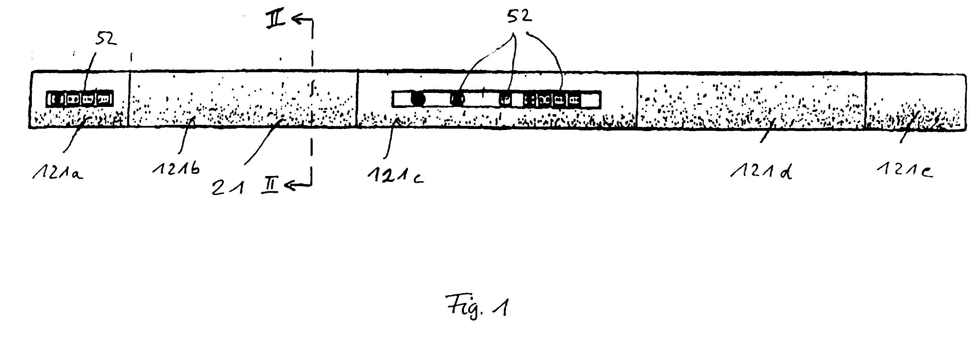

In der Figur 1 ist die Vorderansicht einer Anschlußvorrichtung dargestellt. Da die Frontblende 21 die Ober- und die Unterwand überragt, sind in dieser Darstellung die übrigen Bauteile der Anschlußvorrichtung nicht sichtbar. Die Frontblende 21 besteht aus mehreren - hier insgesamt fünf - Blendenabschnitten 121a-e. Die Blendenabschnitte 121a und 121c sind aus lichtundurchlässigem Material und können an ihrer Außenseite wahlweise mit einem Dekor versehen sein. Diese Blendenabschnitte 121a, 121c tragen zusätzlich die Anschlußmittel 52 in Form von Steckdosen, Gaskupplungen und dergl. Die Blendenabschnitte 121b und 121d bestehen aus transparentem Material besteht, wie z.B. einer Glasplatte, die hinterleuchtet ist. Einen derart hinterleuchteten Abschnitt 121b/d wird man vorzugsweise im Bereich des Patientenbettes vorsehen.

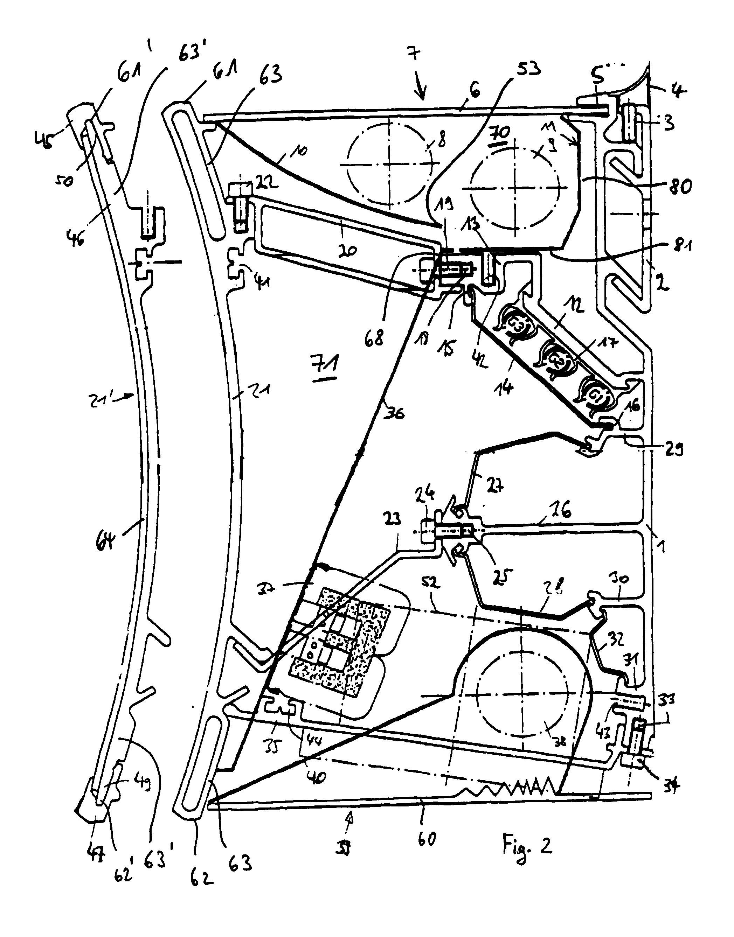

In der Figur 2 ist ein Schnitt durch die in der Figur 1 gezeigte Anschlußvorrichtung längs der Linie II-II dargestellt. Es ist eine Profilschiene 1 zu sehen, welche bespielsweise mittels einer Montageplatte 2 an einer Gebäudewand aufgehängt werden kann. Eine Schraube 3 sichert die Aufhängung. Damit sich im Raum zwischen der Profilschiene und der Montageplatte 2 kein Schmutz ansammeln kann, ist die Montageplatte mittels eines Profilstreifens 4, der bevorzugt aus Kunststoff besteht, abgedeckt.

Im oberen Endbereich ist im Profil der Profilschiene 1 eine Nut 5 vorgesehen, die die Oberwand 6 aufnimmt, die in der hier gezeigten Ausführungsform aus einer transparenten Scheibe besteht. Unterhalb der Oberwand 6 ist der Lampenraum 70 abgetrennt, m dem die die Raumleuchte 7 bildenden Lampen 8, 9 angeordnet sind. Die Lampe 8 kann auch weggelassen werden, so daß die Beleuchtung lediglich mittels der Lampe 9 erfolgt. Der Lampenraum 70 ist gegenüber dem unteren Bereich der Anschlußvorrichtung, wo sich die Gasleitungen und elektrischen Leitungen befinden, mittels einer ersten Trennwand 11 abgeteilt, die im wesentlichen aus einem vertikalen Wandabschnitt 80 und einem horizontalen Wandabschnitt 81 besteht. Die erste Trennwand 11 ist als Reflektor ausgebildet, so daß das von der Lampe 9 erzeugte Licht sowohl nach oben in Richtung Oberwand 6 als auch in Richtung Frontblende reflektiert wird. Die Halterung der ersten Trennwand 11 ist nicht dargestellt, sie erfolgt stirnseitig mit bekannten Mitteln.

Der Lampenraum 70 geht in einen Blendenraum 71 über, der sich nach unten verjüngt. Zur Abtrennung des Blendenraums 71 ist eine zweite Trennwand 36 vorgesehen, die ebenfalls an einer Anformung 12 fixiert ist und sich bis zu der unteren Verstärkung 63 der Frontblende 21 erstreckt. Betriebsmittel 37 (z.B. magnetische Vorschaltgeräte) für die Lampen 8, 9 können an dieser zweiten Trennwand 36 montiert sein.

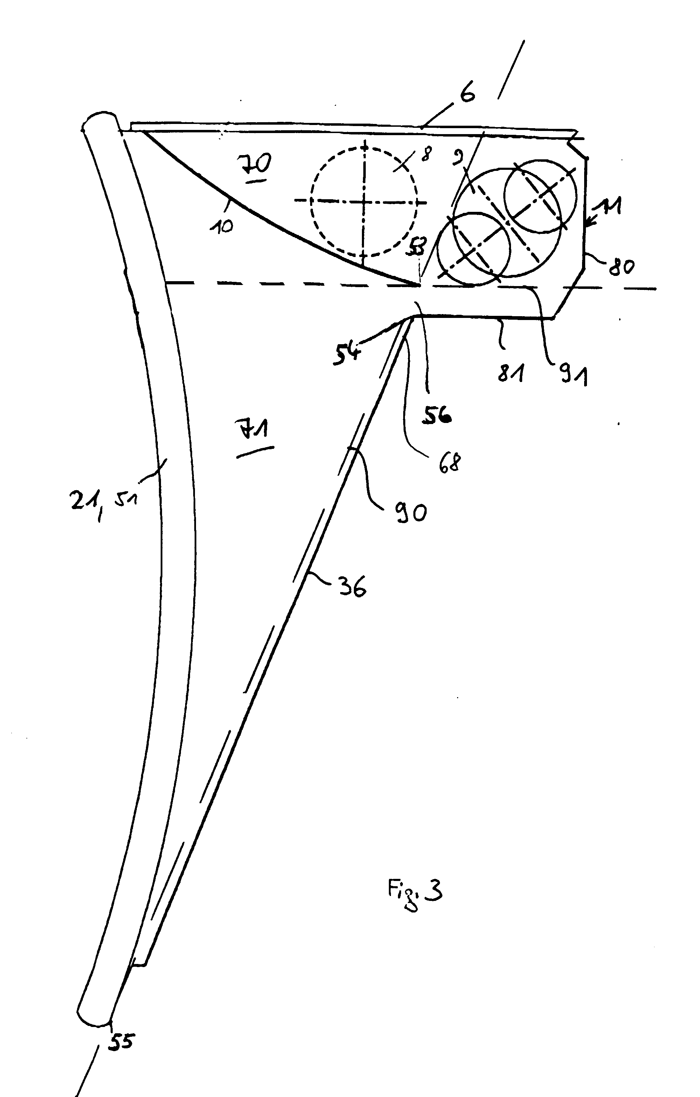

Der Lampenraum 70 ist vom Blendenraum 71 über eine dritte Trennwand 10 getrennt, die sich von der Oberwand 6 bis in den Endbereich 68 der zweiten Trennwand 36 erstreckt. Zwischen der Kante 53 der dritten Trennwand 10 und dem Punkt 54 dem Endbereich 68 der zweiten Trennwand 36 verbleibt ein Lichtaustrittsspalt, der in der Figur 3 mit 56 gekennzeichnet ist. Wie in dieser Figur dargestellt ist, ist die Lampe 9 derart im Lampenraum 70 angeordnet, daß eine am Lampenrohr anliegende Tangente 90 an der Kante 53 der dritten Trennwand 10 vorbeiführt und im wesentlichen parallel zur Ebene der zweiten Trennwand 36 liegt. Die Tangente 90 ist auch gleichzeitig Tangente an die Frontblende 21 im Punkt 55 am unteren Ende der Frontblende 21. Die Lampe 9 ist weiterhin so im Lampenraum 70 angeordnet, daß sie oberhalb einer Horizontalen 91 liegt, die durch die Kante 53 der dritten Trennwand 10 geht. Auf diese Art und Weise wird eine homogene Ausleuchtung des Blendenraums 71 und damit eine entsprechende Hinterleuchtung der die Frontplatte 21 bildenden Glasplatte 51 erzielt.

Unterhalb der ersten Trennwand 11 erstreckt sich eine einstückige Anformung 12 der Profilschiene 1 etwa im Winkel von 45° nach oben und geht in eine waagrecht liegende Aufnahme 13 über. Diese Anformung 12 ist an der Unterseite von einer Kunststoffabdeckung 14 überdeckt, die in zugehörige Ausnehmungen 15 und 16 eingeschnappt wird. Im so gebildeten Raum werden die medizinischen Gase in Kupferrohren mit bevorzugt 12mm Durchmesser in einem bekannten Halteelement geführt.

An der Stirnseite der Aufnahme 13 ist die Nut 18 vorgesehen, die eine weitere Schraube 19 aufnimmt, mittels der ein Tragarm 20 gehalten wird, der die Frontblene 21 mit einer dritten Schraube 22 trägt. Über die gesamte Länge der Profilschiene 1 sind mindestens zwei Tragarme 20, die eine Länge von wenigen Zentimetern aufweisen, in dem Bereich angeordnet, in dem die Frontplatte 21 nicht lichtdurchlässig ist.

Ferner wird die Frontblende 21 von einem Haltearm 23 gegen ein Herausklappen nach oben gesichert. Auch von diesen Armen 23 sind für die gesamte Länge der Profilschiene 1 mindestens zwei vorgesehen.

Auch der Haltearm 23 ist mittels einer Schraube 24, die in einen Schraubkanal 25 eingreift, über eine Anformung 26 an der Profilschiene 1 fixiert. Die Abdeckungen 27, 28 und 32 bilden in Verbindung mit weiteren Anformungen 29, 30 und 31 weitere Versorgungskanäle, insbesondere zur Führung von Leitungen zur Stromversorgung (Starkstrom, Schwachstrom bzw. Kommunikationsleitungen).

Am unteren Ende der Profilschiene 1 ist eine weitere Nut 33 bzw. ein Schraubkanal vorgesehen, in der bzw. an dem mit Hilfe einer Schraube 34 ein Geräteträger 35 zur Halterung von elektrischen Steckdosen und Schaltern befestigt ist. Dieser Träger 35 ist nur in Bereichen, wo keine Leseleuchte 39 vorgesehen ist, angeordnet, d.h. es wechseln sich in Längsrichtung gesehen Geräteträger 35 und Leseleuchte 39 ab. Außerdem stützt dieser Träger die Frontblende 21 zusätzlich ab. Die Leseleuchte 39 besteht in bekannter Art und Weise aus einem eine Lampe 38 teilweise überdeckenden Reflektor 40 und aus einer prismatischen den Unterboden bildenden Abdeckung.

Um das Versorgungssystem möglichst variabel ausführen zu können, sind weitere Schraubkanäle 41, 42, 43, 44 bzw. Nuten vorgesehen, mit denen Halteelemente zusammenwirken können. Die Halteelemente, die nicht dargestellt sind, dienen wiederum der Halterung diverser Einbaukomponenten bzw. Anschlußmittel.

Wie in der Figur 2 dargestellt ist, kann die Frontblende 21 einstückig bzw. die Frontblende 21' mehrteilig ausgebildet sein. Die Frontblende 21 besitzt in ihren Endbereichen, d.h. an ihrer oberen und unteren Kante 61, 62 jeweils Verstärkungen 63 in Form von Anformungen, an denen die Befestigungsmittel, hier u.a. Schraubkanäle und Schrauben 22, angeordnet sind, mit denen die Frontblende 21 beispielsweise an dem Haltearm 20 befestigt werden kann.

Die Frontblende 21' ist mehrteilig ausgebildet und besteht aus einem Trägerelement 46, das an seiner Rückseite die Verstärkungen 63' aufweist. Das Trägerelement weist ebenfalls eine konvexe Krümmung auf und ist an seiner Vorderseite mit einer Dekorplatte 64 belegt, die austauschbar ist. An den oberen und unteren Kanten 61', 62' werden die Dekorplatte 64 und das Trägerelement 46 jeweils von einer Profilschiene 45 bzw. 47 eingefaßt, die Nuten 49 und 50 aufweisen.

## Patentansprüche

1. Kombinierte Anschlußvorrichtung, insbesondere für verschiedenartige Versorgungssysteme in Hospitälern, mit einer an einer Gebäudewand im wesentlichen horizontal zu befestigenden Profilschiene (1), die in kanalartige Räume unterteilt ist und/oder mittels Abdeckelementen in kanalartige Räume unterteilbar ist, in denen die erforderlichen Leitungen und Betriebsmittel untergebracht sind, welche mit an der Außenseite der Vorrichtung angebrachten Anschlußmitteln (52) verbunden sind, und die eine Ober- und eine Unterwand (6, 60) sowie eine Frontblende (21, 21') trägt, dadurch gekennzeichnet,
daß die Frontblende (21, 21') eine über ihre gesamte Länge konkave Krümmung aufweist,
daß sich die Frontblende (21, 21') so weit nach oben und nach unten erstreckt, daß sie mindestens die Oberwand (6) und die Unterwand (60) verdeckt, und
daß die Frontblende (21, 21') austauschbar befestigt ist.

2. Vorrichtung nach Anspruch 1, dadurch gekennzeichnet, daß die Frontblende (21, 21') aus mehreren in Längsrichtung der Vorrichtung nebeneinander angeordneten Blendenabschnitten (121a-e) besteht.

3. Vorrichtung nach einem der Ansprüche 1 oder 2, dadurch gekennzeichnet, daß die Frontblende (21, 21') an ihrer Außenseite mit unterschiedlichen Dekoren versehen ist.

4. Vorrichtung nach einem der Ansprüche 1 bis 3, dadurch gekennzeichnet, daß die Frontblende (21, 21') die Anschlußmittel (52) trägt.

5. Vorrichtung nach einem der Ansprüche 1 oder 2, dadurch gekennzeichnet, daß die Frontblende (21, 21') transparent ist.

6. Vorrichtung nach Anspruch 5, dadurch gekennzeichnet, daß die Frontblende (21, 21') hinterleuchtet ist.

7. Vorrichtung nach einem der Ansprüche 1 bis 6, dadurch gekennzeichnet, daß der Unterboden (60) oder ein Geräteträger (35) die Anschlußmittel (52) trägt und daß die Frontblende (21, 21') die Anschlußmittel (52) nach unten überragt.

8. Vorrichtung nach einem Ansprüche 1 bis 7, dadurch gekennzeichnet, daß die Frontblende (21, 21') ihre eigenen Befestigungsmittel (22) verdeckt.

9. Vorrichtung nach einem der Ansprüche 1 bis 8, dadurch gekennzeichnet, daß Frontblende (21) einstückig ausgebildet ist.

10. Vorrichtung nach einem der Ansprüche 1 bis 8, dadurch gekennzeichnet, daß die Frontblende (21') ein innenliegendes, die Befestigungsmittel (22) tragendes Trägerelement (46) und eine außenliegende Dekorplatte (64) aufweist, wobei Trägerelement (46) und Dekorplatte (64) an ihrer Ober- und Unterkante (61', 62') jeweils von einer gemeinsamen Profilleiste (45, 47) eingefaßt sind.

11. Vorrichtung nach einem Ansprüche 1 bis 10, dadurch gekennzeichnet, daß die Frontblende (21, 21') im Bereich der oberen und unteren Kante (61, 62, 61', 62') Verstärkungen (63, 63') aufweist.

12. Vorrichtung nach einem der Ansprüche 8 bis 11, dadurch gekennzeichnet, daß die Befestigungsmittel (22) an den Verstärkungen (63, 63') angebracht sind.

13. Vorrichtung nach einem der Ansprüche 1 bis 12, dadurch gekennzeichnet, daß die Oberwand (6) transparent ist.

14. Vorrichtung nach Anspruch 13, dadurch gekennzeichnet, daß unterhalb der Oberwand (6) ein Lampenraum (70) abgeteilt ist, in dem mindestens eine Lampe (8, 9) angeordnet ist.

15. Vorrichtung nach Anspruch 14, dadurch gekennzeichnet, daß eine den Lampenraum (70) abtrennende erste Trennwand (11) als Reflektor ausgebildet ist.

16. Vorrichtung nach einem der Ansprüche 14 oder 15, dadurch gekennzeichnet, daß der Lampenraum (70) mit einem sich nach unten verjüngenden hinter der Frontblende (21, 21') befindlichen Blendenraum (71) in Verbindung steht.

17. Vorrichtung nach Anspruch 16, dadurch gekennzeichnet, daß eine den Blendenraum (71) abtrennende zweite Trennwand (36) als Reflektor ausgebildet ist.

18. Vorrichtung nach einem der Ansprüche 15 bis 17, dadurch gekennzeichnet, daß die erste Trennwand (11) ein sich von der Oberwand (6) nach unten erstreckenden vertikalen Abschnitt (80) aufweist, der in einen auf die Frontblende (21, 21') weisenden horizontalen Abschnitt (81) übergeht.

19. Vorrichtung nach einem der Ansprüche 17 oder 18, dadurch gekennzeichnet, daß die zweite Trennwand (36) sich vom horizontalen Abschnitt (81) der ersten Trennwand (11) schräg nach unten bis an die Frontblende (21, 21') erstreckt.

20. Vorrichtung nach einem der Ansprüche 14 bis 19, dadurch gekennzeichnet, daß die Lampe (9) derart im Lampenraum (70) angeordnet ist, daß eine an der Lampe anliegende Tangente (90) oberhalb der Ebene der zweiten Trennwand (36) liegt und als Tangente durch den unteren Endpunkt (55) der Frontblende (21, 21') geht.

21. Vorrichtung nach einem Ansprüche 14 bis 20, dadurch gekennzeichnet, daß zwischen Lampenraum (70) und Blendenraum (71) eine dritte Trennwand (10) angeordnet ist.

22. Vorrichtung nach Anspruch 21, dadurch gekennzeichnet, daß die dritte Trennwand (10) oberhalb des Endbereichs (68) der zweiten Trennwand (36) unter Freilassung eines Lichtaustrittsspaltes (56) angeordnet ist und sich nach oben bis zur Oberwand (6) erstreckt.

23. Vorrichtung nach Anspruch 21 oder 22, dadurch gekennzeichnet, daß die dritte Trennwand (10) in den Blendenraum (71) hinein gekrümmt ist.

24. Vorrichtung nach einem der Ansprüche 21 bis 23, dadurch gekennzeichnet, daß die dritte Trennwand (10) mit ihrer freien Kante (53) vor oder an der Tangente (90) endet.

25. Vorrichtung nach einem Ansprüche 14 bis 24, dadurch gekennzeichnet, daß die Lampe (9) oberhalb einer durch die Kante (53) der dritten Trennwand (10) gehenden Horizontalen (91) angeordnet ist.

26. Vorrichtung nach einem der Ansprüche 21 bis 25, dadurch gekennzeichnet, daß die dritte Trennwand (10) transparent ist.

27. Vorrichtung nach einem der Ansprüche 21 bis 25, dadurch gekennzeichnet, daß die dritte Trennwand (10) als Reflektor ausgebildet ist.

28. Vorrichtung nach einem der Ansprüche 21 bis 25, dadurch gekennzeichnet, daß die dritte Trennwand (10) ein Lochblech ist.

29. Vorrichtung nach einem der Ansprüche 1 bis 25, dadurch gekennzeichnet, daß der Unterboden (60) transparent ist.

30. Vorrichtung nach Anspruch 29, dadurch gekennzeichnet, daß über dem Unterboden (60) eine Leselampe (38) angeordnet ist.

## Claims

1. Combined connection device, in particular for different types of supply systems in hospitals, with a profile rail (1) to be secured essentially horizontally to a wall of the building, which is divided into channel-like areas and/or is capable of being subdivided by means of cover elements into channel-like areas, in which the lines and operational media required are located, which are connected to the connection media (52) located on the outside of the device, and which carries an upper and a lower wall (6, 60) and a front panel (21, 21'), characterised in that
The front panel (21, 21') features a concave curvature over its entire length,
The front panel (21, 21') extends sufficiently far upwards and downwards that it covers at least the upper wall (6) and the lower wall (60), and
The front panel (21, 21') is secured in such a manner that it can be replaced.

2. Device according to Claim 1, characterised in that the front panel (21, 21') consists of several panel sections (121a-e) arranged next to one other in the longitudinal direction of the device.

3. Device according to one of Claims 1 or 2, characterised in that the front panel (21, 21') is provided on its outside with a variety of different decors.

4. Device according to one of Claims 1 to 3, characterised in that the front panel (21, 21') carries the connection media (52).

5. Device according to one of Claims 1 or 2, characterised in that the front panel (21, 21') is transparent.

6. Device according to Claim 5, characterised in that the front panel (21, 21') is lit from behind.

7. Device according to one of Claims 1 to 6, characterised in that the base floor (60) or an equipment carrier (35) carries the connection media, and that the front panel (21, 21') projects downwards over the connection media (52).

8. Device according to one of Claims 1 to 7, characterised in that the front panel (21, 21') covers its own securing media (22).

9. Device according to one of Claims 1 to 8, characterised in that the front panel (21) is designed as one single element.

10. Device according to one of Claims 1 to 8, characterised in that the front panel (21') features a carrier element (46) located in the interior, which carries the securing media (22), and an exterior decor panel (64) on its upper and lower edge (61', 62'), prepared in each case from a common profile strip (45, 47).

11. Device according to one of Claims 1 to 10, characterised in that the front panel (21, 21') features reinforcement elements (63, 63') in the area of the upper and lower edge (61, 62, 61', 62').

12. Device according to one of Claims 8 to 11, characterised in that the securing media (22) are attached to the reinforcement elements (63, 63').

13. Device according to one of Claims 1 to 12, characterised in that the upper wall (6) is transparent.

14. Device according to Claim 13, characterised in that a lamp area (70) is divided off below the upper wall (6), in which at least one lamp (8, 9) is located.

15. Device according to Claim 14, characterised in that a first partition wall (11), dividing off the lamp area (70), is designed as a reflector.

16. Device according to one of Claims 14 or 15, characterised in that the lamp area (70) is in connection with an aperture area (71) located behind the front panel (21, 21'), which tapers downwards.

17. Device according to Claim 16, characterised in that a second partition wall (36) dividing off the aperture area (71) is designed as a reflector.

18. Device according to one of Claims 15 to 17, characterised in that the first partition wall (11) features vertical section (80) extending downwards from the upper wall (6), which merges into a horizontal section (81) pointing towards the front panel (21,21').

19. Device according to one of Claims 17 or 18, characterised in that the second partition wall (36) extends from the horizontal section (81) of the first partition wall (11) obliquely downwards as far as the front panel (21, 21').

20. Device according to one of Claims 14 to 19, characterised in that the lamp (9) is arranged in the lamp area (70) in such a way that a tangent element (90) is located above the plane of the second partition wall (36) and passes as a tangent through the lower end point (55) of the front panel (21, 21').

21. Device according to one of Claims 14 to 20, characterised in that a third partition wall (10) is arranged between the lamp area (70) and the aperture area (71).

22. Device according to Claim 1, characterised in that the third partition wall (10) is arranged above the end section (68) of the second partition wall (36), leaving free a light emergence gap (56), and extends upwards as far as the upper wall (6).

23. Device according to Claim 21 or 22, characterised in that the third partition wall (10) is bent inwards into the aperture area (71).

24. Device according to one of Claims 21 to 23, characterised in that the third partition wall (10) ends with its free edge (53) before or at the tangent (90).

25. Device according to one of Claims 14 to 24, characterised in that the lamp (9) is arranged above a horizontal element (91) which passes through the edge (53) of the third partition wall (10).

26. Device according to one of Claims 21 to 25, characterised in that the third partition wall (10) is transparent.

27. Device according to one of Claims 21 to 25, characterised in that the third partition wall (10) is designed as a reflector.

28. Device according to one of Claims 21 to 25, characterised in that the third partition wall (10) is a perforated plate.

29. Device according to one of Claims 1 to 25, characterised in that the base floor (60) is transparent.

30. Device according to Claim 29, characterised in that a reading lamp (38) is arranged above the base floor (60).

## Revendications

1. Dispositif de branchement combiné, destiné en particulier à différents systèmes d'alimentation dans les hôpitaux, comprenant un rail profilé (1) à fixer sensiblement à l'horizontale sur un mur, lequel rail profilé est subdivisé en compartiments en forme de conduits et/ou peut être subdivisé par des éléments de recouvrement en compartiments en forme de conduits, dans lesquels sont posés les conduites et le matériel d'alimentation électrique nécessaires, lesquels sont reliés à des moyens de branchement (52) montés sur la face extérieure du dispositif, et lequel rail porte une paroi supérieure et une paroi inférieure (6, 60), ainsi qu'un cache frontal (21, 21'), caractérisé en ce que le cache frontal (21, 21') présente une courbure concave sur toute sa longueur, en ce que le cache frontal (21, 21') s'étend vers le haut et vers le bas jusqu'à ce qu'il couvre la paroi supérieure (6) et la paroi inférieure (60), et en ce que le cache frontal (21, 21') est fixé de manière amovible.

2. Dispositif selon la revendication 1, caractérisé en ce que le cache frontal (21, 21') est formé par plusieurs parties de cache (121a-e) disposées les unes à côté des autres dans le sens longitudinal du dispositif.

3. Dispositif selon la revendication 1 ou 2, caractérisé en ce que le cache frontal (21, 21') est revêtu de décors différents sur sa face extérieure.

4. Dispositif selon l'une quelconque des revendications 1 à 3, caractérisé en ce que le cache frontal (21, 21') porte les moyens de branchement (52).

5. Dispositif selon la revendication 1 ou 2, caractérisé en ce que le cache frontal (21, 21') est transparent.

6. Dispositif selon la revendication 5, caractérisé en ce que le cache frontal (21, 21') est éclairé en arrière-plan.

7. Dispositif selon l'une quelconque des revendications 1 à 6, caractérisé en ce que le fond (60) ou un support pour appareillage (35) porte les moyens de branchement (52) et en ce que le cache frontal (21, 21') s'avance en saillie vers le bas au-delà des moyens de branchement (52).

8. Dispositif selon l'une quelconque des revendications 1 à 7, caractérisé en ce que le cache frontal (21, 21') couvre ses propres moyens de fixation (22).

9. Dispositif selon l'une quelconque des revendications 1 à 8, caractérisé en ce que le cache frontal (21) est réalisé en une seule pièce.

10. Dispositif selon l'une quelconque des revendications 1 à 8, caractérisé en ce que le cache frontal (21') comporte un élément de support (46) intérieur qui porte un moyen de fixation (22) et une plaque décorative (64) extérieure, l'élément de support (46) et la plaque décorative (64) étant bordés par une baguette profilée (45, 47) commune posée sur le bord supérieur et le bord inférieur (61', 62').

11. Dispositif selon l'une quelconque des revendications 1 à 10, caractérisé en ce que le cache frontal (21, 21') comporte des renforts (63, 63') dans la zone du bord supérieur et du bord inférieur (61, 62, 61', 62').

12. Dispositif selon l'une quelconque des revendications 8 à 11, caractérisé en ce que les moyens de fixation (22) sont montés contre les renforts (63, 63').

13. Dispositif selon l'une quelconque des revendications 1 à 12, caractérisé en ce que la paroi supérieure (6) est transparente.

14. Dispositif selon la revendication 13, caractérisé en ce qu'un compartiment pour lampe (70), dans lequel est posée au moins une lampe (8, 9), est délimité en dessous de la paroi supérieure (6).

15. Dispositif selon la revendication 14, caractérisé en ce qu'une première cloisons (11) délimitant le compartiment pour lampe (70) est conçue sous forme de réflecteur.

16. Dispositif selon la revendication 14 ou 15, caractérisé en ce que le compartiment pour lampe (70) communique avec un compartiment abat-jour (71) se rétrécissant vers le bas et situé derrière le cache frontal (21, 21').

17. Dispositif selon la revendication 16, caractérisé en ce qu'une deuxième cloison (36) délimitant le compartiment abat-jour (71) est conçue sous forme de réflecteur.

18. Dispositif selon l'une quelconque des revendications 15 à 17, caractérisé en ce que la première cloison (11) est formée par une partie verticale (80) qui s'étend depuis la paroi supérieure (6) vers le bas et se prolonge pour former une partie horizontale (81) orientée vers le cache frontal (21, 21').

19. Dispositif selon la revendication 17 ou 18, caractérisé en ce que la deuxième cloison (36) s'étend depuis la partie horizontale (81) de la première cloison (11) en oblique vers le bas contre le cache frontal (21, 21').

20. Dispositif selon l'une quelconque des revendications 14 à 19, caractérisé en ce que la lampe (9) est disposée dans le compartiment pour lampe (70) de telle sorte qu'une tangente (90) à la lampe soit située au-dessus du plan de la deuxième cloison (36) et forme également la tangente au point inférieur (55) du cache frontal (21, 21').

21. Dispositif selon l'une quelconque des revendications 14 à 20, caractérisé en ce qu'une troisième cloison (10) est posée entre le compartiment pour lampe (70) et le compartiment abat-jour (71).

22. Dispositif selon la revendication 21, caractérisé en ce que la troisième cloison (10) est posée au-dessus de l'extrémité (68) de la deuxième cloison (36) en laissant subsister une fente d'émergence de la lumière (56) et s'étend vers le haut jusqu'à la paroi supérieure (6).

23. Dispositif selon la revendication 21 ou 22, caractérisé en ce que la troisième paroi (10) est cintrée vers l'intérieur du compartiment abat-jour (71).

24. Dispositif selon l'une quelconque des revendications 21 à 23, caractérisé en ce que le bord libre (53) de la troisième cloison (10) se termine devant ou contre la tangente (90).

25. Dispositif selon l'une quelconque des revendications 14 à 24, caractérisé en ce que la lampe (9) est disposée au-dessus d'une ligne horizontale (91) qui passe par le bord (53) de la troisième cloison (10).

26. Dispositif selon l'une quelconque des revendications 21 à 25, caractérisé en ce que la troisième cloison (10) est transparente.

27. Dispositif selon l'une quelconque des revendications 21 à 25, caractérisé en ce que la troisième cloison (10) est conçue sous forme de réflecteur.

28. Dispositif selon l'une quelconque des revendications 21 à 25, caractérisé en ce que la troisième cloison (10) est une plaque métallique perforée.

29. Dispositif selon l'une quelconque des revendications 21 à 25, caractérisé en ce que le fond (60) est transparent.

30. Dispositif selon la revendication 29, caractérisé en ce qu'une lampe de lecture (38) est disposée au-dessus du fond (60).
